# FASCICULE DE BREVET EUROPEEN

(11) **EP 2 900 846 B1**
(45) Date de publication et mention de la délivrance du brevet: **17.08.2022**
(21) Numéro de dépôt: 13801780.1
(22) Date de dépôt: 24.09.2013
(51) Int. Cl.: H01M 8/021, H01M 8/0228, C25B 1/04, H01M 8/0217, H01M 8/12, C25B 9/65, C25B 9/70, C25B 11/036, H01M 8/2432

(54) **COMPOSANT CONSTITUANT UN INTERCONNECTEUR D'ELECTROLYSEUR EHT OU DE PILE A COMBUSTIBLE SOFC ET PROCEDES DE REALISATION ASSOCIES**
KOMPONENTE FÜR EINEN HTE-ELEKTROLYSEUR-VERNETZER ODER EINEN SOFC-BRENNSTOFFZELLENVERNETZER UND PRODUKTIONSVERFAHREN DAFÜR
COMPONENT CONSTITUTING AN HTE ELECTROLYSER INTERCONNECTOR OR SOFC FUEL CELL INTERCONNECTOR AND ASSOCIATED PRODUCTION PROCESSES

(30) Priorité: 26.09.2012 FR 1259040
(43) Date de publication de la demande: 05.08.2015
(73) Titulaire: Commissariat à l'Énergie Atomique et aux Énergies Alternatives, 75015 Paris (FR)
(72) Inventeur: LAUCOURNET, Richard, F-38500 La Buisse (FR); DALMASSO, Myriam, F-38610 Gieres (FR); RADO, Cyril, F-38000 Grenoble (FR)
(74) Mandataire: Nony
(86) Numéro de dépôt international: PCT/IB2013/058814
(87) Numéro de publication internationale: WO 2014/049523

(56) Documents cités:
- EP-A1- 0 338 823
- EP-A1- 0 338 823
- WO-A1-96/28855
- WO-A1-96/28855
- WO-A1-97/35349
- JP-A- H0 250 983
- US-A1- 2003 231 973
- US-A1- 2006 285 993
- US-A1- 2006 285 993
- US-A1- 2007 037 037
- US-A1- 2009 214 926
- US-B1- 6 326 096
- US-B2- 8 546 046

## Description

### Domaine technique

La présente invention concerne le domaine des piles à combustibles à oxyde solide (SOFC, acronyme anglais pour Solid Oxid Fuel Cell) et celui de l'électrolyse de l'eau à haute température (EHT, ou EVHT pour électrolyse de la vapeur d'eau à haute température, ou HTE acronyme anglais pour High Temperature Electrolysis, ou encore HTSE acronyme anglais pour High Temperature Steam Electrolysis).

La présente invention concerne les composants en alliage métallique constituant les dispositifs d'interconnexion qui sont soumis aux hautes températures et d'un côté à une atmosphère réductrice soit riche en vapeur d'eau H₂O/H₂ (hydrogène humide ou hydrogène riche en vapeur d'eau) dans les réacteurs d'électrolyse EHT soit riche en H₂ dans les piles SOFC, et de l'autre côté à une atmosphère oxydante soit riche en O₂ dans les réacteurs EHT, soit riche en air dans les piles SOFC dont une des fonctions est d'assurer le passage du courant électrique dans les réacteurs d'électrolyse EHT.

Les dispositifs d'interconnexion, électrique et fluidique, aussi appelés interconnecteurs ou encore plaques d'interconnexion, sont les dispositifs qui assurent la connexion en série de chaque cellule électrochimique (pile ou cellule d'électrolyse) dans l'empilement de piles et des réacteurs EHT, combinant ainsi la production de chacune. Les interconnecteurs assurent ainsi les fonctions d'amenée et collecte de courant et délimitent des compartiments de circulation (distribution et/ou la collecte) des gaz.

En sus de ces fonctions, les interconnecteurs doivent pouvoir résister à la corrosion dans les atmosphères qui peuvent être très oxydantes dans des gammes de températures très élevées, typiquement comprises entre 600 et 900°C, telles que les atmosphères riches en vapeur d'eau H₂O/H₂ du côté cathode des électrolyseurs EHT, corrosion qui peut être néfaste pour la durabilité de ces derniers.

En outre, les interconnecteurs doivent avoir dans ces atmosphères un comportement thermomécanique proche de celui des cellules électrochimiques afin de conserver une bonne étanchéité entre compartiments aux cathodes, dits compartiments cathodiques et compartiments aux anodes, dits compartiments anodiques.

La présente invention vise plus particulièrement à simplifier la réalisation d'interconnecteurs, de type plaques à canaux ou interdigitées et à en réduire le coût de fabrication, afin de réduire le coût de fabrication d'un électrolyseur EHT ou d'une pile à combustible SOFC qui en est munie.

Elle vise également à améliorer le contact électrique entre un interconnecteur et une cellule électrochimique contre laquelle elle est en appui.

### Art antérieur

Une pile à combustible SOFC ou un électrolyseur EHT est constitué d'un empilement de motifs élémentaires comportant chacun une cellule électrochimique à oxydes solides, constituée de trois couches superposées l'une sur l'autre anode/électrolyte/cathode, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules.

Pour réaliser l'électrolyse de la vapeur d'eau à haute température EHT, typiquement entre 600 et 950°C, on injecte de la vapeur d'eau H₂O dans le compartiment cathodique. Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène H₂ et des ions oxygène. Le dihydrogène est collecté et évacué en sortie de compartiment à hydrogène. Les ions oxygène O₂⁻ migrent à travers l'électrolyte et se recombinent en dioxygène à l'interface entre l'électrolyte et l'électrode à oxygène (anode).

Pour assurer le fonctionnement d'une pile à combustible SOFC, on injecte de l'air (oxygène) dans le compartiment cathodique et de l'hydrogène dans le compartiment anodique. L'hydrogène H₂ va se transformer en ions H+ et libérer des électrons qui sont captés par l'anode. Les ions H+ arrivent sur la cathode où ils se combinent aux ions O₂⁻constitués à partir de l'oxygène de l'air, pour former de l'eau. Le transfert des ions H+ et des électrons vers la cathode va produire un courant électrique continu à partir de l'hydrogène.

Les conditions de fonctionnement d'un électrolyseur EHT étant très proches de celles d'une pile à combustible SOFC, les mêmes contraintes technologiques se retrouvent, à savoir principalement la tenue mécanique aux cyclages thermiques d'un empilement de matériaux différents (céramiques et alliage métallique), le maintien de l'étanchéité entre les compartiments anodique et cathodique, la tenue au vieillissement des interconnecteurs métalliques et la minimisation des pertes ohmiques à diverses interfaces de l'empilement.

Les aciers inoxydables ferritiques chromino-formeurs comptent parmi les alliages d'interconnecteurs les plus prometteurs pour les électrolyseurs EHT, compte tenu qu'ils ont déjà été utilisés avec succès en tant qu'alliages dans des piles à combustibles à haute température SOFC [1-3]. Parmi ces alliages d'interconnecteurs, ceux déjà commercialisés sous les dénominations Crofer 22 APU et Crofer 22 H à base Fe-22%Cr, par la société ThyssenKrupp VDM, ou celui sous la dénomination « Sanergy HT » à base Fe-22%Cr, par la société Sandvik, ou encore celui sous la dénomination K41X par la société APERAM pour des températures de fonctionnement comprises entre 600 et 900°C.

Ce type d'alliages peut présenter un coefficient d'expansion thermique voisin des matériaux de cellules et une relativement bonne résistance à la corrosion comparativement à d'autres matériaux métalliques. Néanmoins, il requiert un certain nombre de revêtements destinés d'une part à le protéger contre l'oxydation et à éviter l'évaporation du Cr en conditions de fonctionnement qui du côté oxydant vient polluer l'électrode à air et dégrade notablement son fonctionnement, et d'autre part un revêtement permettant de minimiser la résistance électrique entre l'interconnecteur et la cellule.

Il est connu que la résistance à l'oxydation sous air de ces alliages est assurée par la formation d'une couche superficielle d'oxydes riches en chrome (chromine Cr₂O₃ et oxyde spinelle (Cr,Mn)₃O₄) [4].

Cependant, avec de tels alliages nus, il est connu que des exigences de fonctionnement ne sont pas pleinement satisfaites sur la durée pour l'application aux interconnecteurs faisant face à l'électrode à oxygène, i.e. interconnecteurs cathodiques SOFC et interconnecteurs anodiques EHT. En premier lieu, il apparaît que la résistance spécifique de surface (ASR, acronyme anglais pour « Area Specific Resistance »), liée à la collection du courant, devient ainsi trop élevée du côté de l'électrode à oxygène [1,3]. De plus, l'ASR sous hydrogène humide, du côté de l'électrode à hydrogène, est supérieure à celui sous air [5]. D'autre part, la volatilité de la chromine Cr₂O₃ à la température de fonctionnement provoque un empoisonnement de l'électrode à oxygène EHT (anode EHT), qui s'accompagne d'une dégradation de ses performances, de manière comparable à celle observée pour l'électrode à oxygène SOFC (cathode SOFC).

La littérature décrit ainsi des revêtements d'une part, pour interconnecteurs de piles SOFC, et d'autre part, pour la face des interconnecteurs en regard de l'électrode à oxygène [6]. Ces revêtements ont uniquement pour fonction de limiter l'évaporation de chrome, d'assurer la conduction électronique et une bonne résistance à l'oxydation de l'alliage sous air, c'est-à-dire en atmosphère en compartiments cathodiques de piles SOFC. Parmi ces revêtements, il est connu de réaliser des dépôts conformes à la géométrie des interconnecteurs, de deux couches céramiques conductrices, l'une dite couche de protection dont la fonction est de protéger l'alliage métallique de l'oxydation (compartiment oxydant) et la seconde, dite couche de contact électrique en vue d'améliorer le contact électrique entre l'interconnecteur et la cellule dont la planéité est souvent imparfaite, le défaut de planéité mesuré étant de 10 à 20 microns.

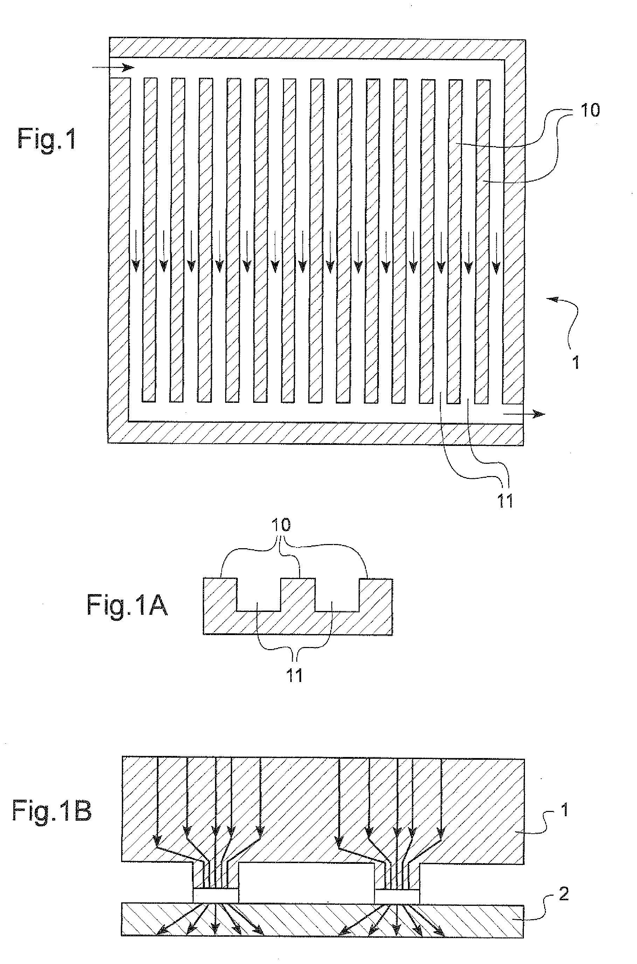

En ce qui concerne la géométrie des interconnecteurs, on a représenté en figures 1, 1A et 1B, une plaque à canaux 1 couramment utilisée à la fois dans les électrolyseurs EHT et dans les piles à combustibles SOFC. L'amenée ou la collecte du courant à l'électrode est réalisée par les dents ou nervures 10 qui sont en contact mécanique direct avec l'électrode concernée. L'amenée de vapeur d'eau à la cathode ou de gaz drainant à l'anode dans un électrolyseur EHT, l'amenée d'air (O₂) à la cathode ou d'hydrogène à l'anode dans une pile SOFC est symbolisée par les flèches en figure 1. La collecte de l'hydrogène produit à la cathode ou de l'oxygène produit à l'anode dans un électrolyseur EHT, la collecte de l'eau produite à la cathode ou de l'hydrogène en surplus à l'anode dans une pile SOFC est faite par les canaux 11 qui débouchent dans une connexion fluidique, couramment appelée clarinette, commune à l'empilement de cellules. La structure de ces interconnecteurs est faite pour réaliser un compromis entre les deux fonctions d'amenée et de collecte (gaz/courant).

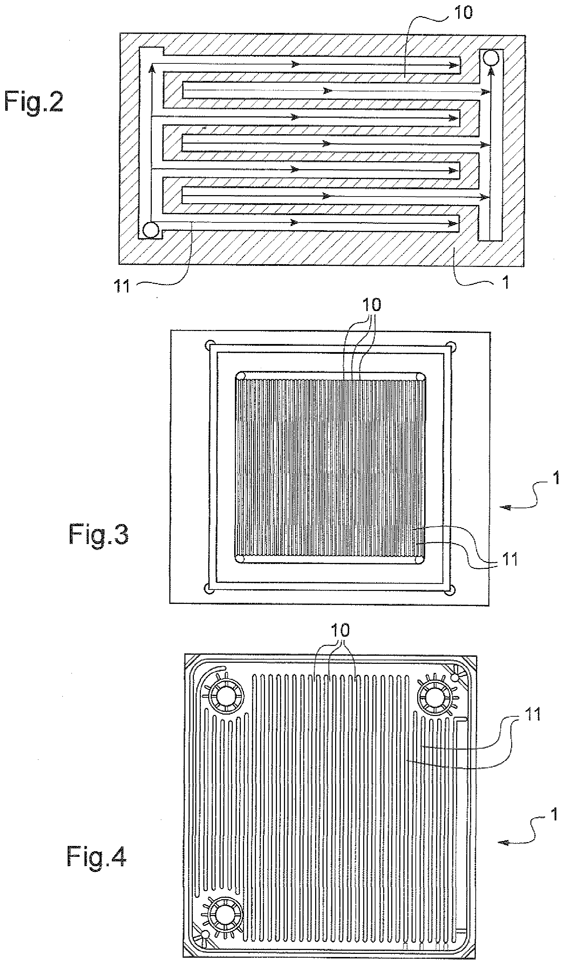

Une autre plaque interconnectrice 1 a déjà été proposée [7]. Elle est représentée en figure 2 avec la circulation du fluide représentée par les flèches : sa structure est de type interdigitée.

Les inconvénients majeurs de cette plaque à canaux ou de structure interdigitée sont liés à leur technique de réalisation. Ainsi, ces structures de plaques nécessitent une épaisseur de matière importante, typiquement de 5 à 10 mm, pour la zone de collection des gaz produits et une mise en forme par usinage dans la masse, des canaux de distribution des gaz. Une représentation photographique d'une telle plaque usinée est donnée en figure 3. Les coûts de matière et d'usinage sont importants et directement reliés à la finesse de pas des canaux à usiner : plus particulièrement des distances entre canaux inférieures à 1 mm.

L'emploi de tôles minces, typiquement de 0,5 à 2 mm, embouties puis assemblées entre elles par soudage laser a déjà été éprouvé. Une représentation photographique d'une telle plaque obtenue par assemblage de tôles embouties est donnée en figure 4. Cette technique a pour avantage de limiter le coût de matière première mais ne permet pas d'atteindre une finesse de canaux aussi élevée que par usinage. De fait, les possibilités de réalisation pour la profondeur des canaux, la largeur unitaire de dent et le pas entre dents sont limitées. De plus, le coût de l'outillage d'emboutissage nécessite une production en grande série.

Bon nombre de développements ont été réalisés dans le but d'améliorer le contact électrique entre cellules et interconnecteurs et la gestion des fluides vers la cellule.

Le brevet US 6106967 propose ainsi un interconnecteur plan, mince (1-10 mm) en métal (superalliage) et une cellule électrochimique avec des électrodes possédant des canaux internes assurant la distribution des fluides. Cependant, si cette solution présente l'avantage de permettre une bonne distribution des fluides, elle n'améliore en rien la qualité du contact électrique entre le métal et les électrodes. De plus, la réalisation de telles cellules est complexe et par conséquent coûteuse.

La demande de brevet US 2004/0200187 propose de disposer entre les électrodes et le séparateur plan métallique (superalliage), une structure préformée ondulée en métal (alliage à base de chrome ou d'alliage à base de métaux nobles). Cette structure assurant le contact électrique entre les électrodes et le séparateur. Cette solution présente l'inconvénient d'être appliquée au compartiment cathodique (SOFC) et donc de soumettre la structure préformée ondulée à une oxydation importante.

La demande de brevet WO 2010/085248 qui propose l'ajout d'une couche de métal poreuse soudée à l'interconnecteur usiné. Cette couche est préférentiellement une toile de nickel qui est placée de part et d'autre de la cellule, c'est-à-dire en contact avec l'anode et la cathode. Cependant, en étant solidaire de l'interconnecteur en un métal de nature différente de la toile, cette dernière va se déformer en montant en température par effet bilame. Cet effet bilame a pour conséquence soit la perte du contact électrique soit la dégradation de la cellule. D'autre part, en plaçant une toile de nickel dans le compartiment cathodique (SOFC), son oxydation va conduire à une forte résistance électrique.

La demande de brevet US 2002/0048700 propose l'utilisation d'une grille métallique qui peut être disposée entre les électrodes et l'interconnecteur plan. Cette grille a pour vocation d'améliorer la distribution des gaz vers les électrodes. Elle est placée également de part et d'autre de la cellule, c'est-à-dire dans les compartiments oxydant (cathode) et réducteur (anode). Les métaux préférentiellement retenus sont le nickel ou le cuivre. Cependant, en raison de la mauvaise tenue à l'oxydation en milieu oxydant, le nickel ou le cuivre ou leurs alliages génère la formation d'une couche d'oxyde très résistive. Cette solution n'est donc pas viable.

La demande de brevet CA 2567673 propose le dépôt de couches sur un interconnecteur plan. Les couches sont déposées à partir d'une suspension composée d'un solvant, de polymères et d'une phase primaire et d'une phase secondaire destinée à ajuster le comportement thermomécanique (coefficient d'expansion thermique) à celui de la cellule électrochimique. Du côté anodique, la phase primaire est de préférence en Ni, Ag, Au, Pt, Pd, Rh, Cu, Co ou leurs oxydes ou l'oxyde de cérium dopé ou d'autres oxydes conducteurs. La phase secondaire peut être des oxydes tels que Al₂O₃, MgO, TiO₂, les oxydes de Mn, ZrO2. Du côté cathodique, la phase primaire est composée de manganite, ou plus largement de pérovskite conductrice. La phase secondaire est composée de métaux nobles ou d'oxydes tels que CuO, La₂O₃, SrO, ou d'oxydes de Mn ou de Co. La suspension peut être appliquée par différents procédés tels que le trempage, la pulvérisation, la sérigraphie. Un traitement thermique (600-1000°C) permet d'éliminer les matières organiques. Si cette solution présente l'avantage de disposer des matériaux spécifiquement adaptés aux compartiments anodiques et cathodiques, elle ne permet pas d'assurer la gestion fluidique des gaz entre l'interconnecteur plan et les électrodes. Et en raison de la forte compacité de la couche résiduelle après traitement thermique, la perte de charge engendrée par les couches est préjudiciable pour un bon fonctionnement des cellules. Des interconnecteurs sont également décrits dans les documents US 2003/231973 et US 2006/285993.

Il existe donc un besoin d'améliorer les interconnecteurs pour les piles SOFC ou les électrolyseurs EHT, notamment en vue de rendre plus simple et moins coûteuse leur technique de fabrication, d'assurer une bonne distribution des gaz vers les électrodes, de permettre une bonne accommodation des écarts thermomécaniques entre interconnecteurs et cellules électrochimiques, de protéger la cathode (SOFC) contre la diffusion du Chrome (Cr) provenant de l'oxydation de l'interconnecteur, d'obtenir un bon contact électrique entre les électrodes et l'interconnecteur,

Un but de l'invention est de répondre au moins en partie à ce besoin.

Un autre but de l'invention est de proposer un interconnecteur permettant d'atteindre le but précédent et qui soit peu coûteux à réaliser.

### Exposé de l'invention

Pour ce faire, l'invention concerne, sous l'un de ses aspects, un composant constituant un interconnecteur de pile à combustible ou d'électrolyseur à haute température, comportant un substrat en alliage métallique, de type chromino-formeur, dont l'élément de base est du Fer (Fe) ou du Nickel (Ni), le substrat ayant deux faces planes principales, une des faces planes principales étant revêtue d'un revêtement comportant une couche épaisse en céramique à l'état cru, ladite couche épaisse en céramique étant rainurée en délimitant des canaux adaptés pour la distribution et/ou la collecte de gaz, tels que vapeur d'eau H₂O, H₂, Air.

L'invention concerne également un composant constituant un interconnecteur de pile à combustible ou d'électrolyseur à haute température, comportant un substrat en alliage métallique, de type chromino-formeur, dont l'élément de base est du Fer (Fe) ou du Nickel (Ni), le substrat ayant deux faces planes principales, une des faces planes principales étant revêtue d'une couche épaisse métallique à l'état cru, ladite couche épaisse métallique étant rainurée en délimitant des canaux adaptés pour la distribution et/ou la collecte de gaz, tels que vapeur d'eau H₂O, H₂ ; O₂ , gaz drainant.

Selon un mode de réalisation, l'une des faces planes principales est revêtue d'un revêtement comportant une couche épaisse en céramique et l'autre des faces planes principales est revêtue d'une couche épaisse métallique, chacune des couches épaisses étant rainurée en délimitant des canaux adaptés pour la distribution et/ou la collecte de gaz, tels que vapeur d'eau H₂O, gaz drainant, Air, O₂, H₂.

On précise que dans le cadre de l'invention, on entend par « couche épaisse», une couche dont l'épaisseur est supérieure à celle d'une couche obtenue par une technologie dite « couche mince », typiquement l'épaisseur est comprise entre 2 et 15 µm.

Par « chromino-formeur», on entend ici et dans le cadre de l'invention, le sens usuel, c'est-à-dire un substrat en alliage métallique contenant du chrome. On pourra se reporter au paragraphe 1.4 en page 30 de la publication [9], pour voir le sens usuel de cette définition.

De préférence, le matériau de la couche épaisse en céramique est choisi parmi un manganite de lanthane de formule La1-xSrxMO₃ avec M (métaux de transition) = Ni, Fe, Co, Mn, Cr, seul ou en mélange, ou des matériaux de structure lamellaire tels que les nickelates de lanthanide de formule Ln₂NiO₄ (Ln= La, Nd, Pr), ou un autre oxyde pérovskite conducteur électrique.

De préférence encore, le matériau de la couche épaisse métallique est choisi parmi le Nickel (Ni) et ces alliages ainsi que tous les alliages chromino-formeurs dont l'élément de base est du Fer (Fe).

Avantageusement, l'épaisseur de la couche en céramique est comprise entre 60 et 500 µm.

Avantageusement encore, l'épaisseur de la couche métallique est comprise entre 60 et 500 µm.

L'alliage métallique chromino-formeur du substrat peut être choisi parmi les alliages inoxydables ferritiques (Fe-Cr), austénitiques (Ni-Fe-Cr) ou les superalliages à base Nickel formant en surface une couche d'oxyde de chrome Cr₂O₃, dit couche de chromine.

Selon une variante de réalisation avantageuse, le substrat est constitué d'au moins une feuille mince, dont l'épaisseur d'une feuille mince est de préférence comprise entre 0,1 et 1 mm.

Selon une autre variante de réalisation avantageuse, le substrat est constitué d'une unique plaque à faces principales planes, dont l'épaisseur est de préférence comprise entre 1 et 10 mm.

Selon une application envisagée, le composant selon l'invention constitue un constituant un interconnecteur d'un réacteur d'électrolyse à l'eau à haute température (EHT) comportant un empilement de cellules d'électrolyse élémentaires formées chacune d'une cathode, d'une anode et d'un électrolyte intercalé entre la cathode et l'anode, la couche épaisse en céramique rainurée étant en contact avec l'anode d'une de deux cellules élémentaires adjacentes, la couche épaisse métallique rainurée étant en contact avec la cathode de l'autre des deux cellules élémentaires adjacentes.

Selon une autre application envisagée, le composant constitue un interconnecteur d'une pile à combustible (SOFC) comportant un empilement de cellules de piles élémentaires formées chacune d'une cathode, d'une anode et d'un électrolyte intercalé entre la cathode et l'anode, la couche épaisse en céramique rainurée étant en contact avec la cathode d'une de deux cellules élémentaires adjacentes, la couche épaisse métallique rainurée étant en contact avec l'anode de l'autre des deux cellules élémentaires adjacentes.

Un interconnecteur selon la présente invention est plus avantageux qu'un interconnecteur selon l'état de l'art, car le revêtement avec une couche épaisse en céramique sur une face principale et avec le cas échéant une couche épaisse métallique sur l'autre face principale présente un caractère de souplesse. Les couches épaisses en céramique et métallique selon l'invention sont à l'état cru dans l'interconnecteur, c'est-à-dire non dense. Elles présentent donc un caractère d'adaptation mécanique. Cela a un avantage primordial dans le cas d'un électrolyseur EHT ou une pile à combustible SOFC dans chacun desquels il est nécessaire d'appliquer un effort de compression (charge) pour assurer les étanchéités entre les différentes cellules constituant l'empilement. Ainsi, en couche épaisse, le dépôt d'une bande de céramique ou métallique va pouvoir s'adapter ou se déformer, lorsque la charge va être appliquée sur l'empilement. Grâce à cela, les imperfections d'ajustement entre les différents composants de l'empilement (interconnecteurs et cellules électrochimiques) peuvent être ainsi compensées par ces adaptations (déformations) des couches épaisses.

Les canaux réalisés dans le cadre de l'invention : la largeur des canaux est ainsi avantageusement comprise entre 0,15 et 5 mm, tandis que la profondeur des canaux est avantageusement comprise entre 0,1 et 0,5 mm.

L'invention a également pour objet sous un autre de ses aspects, un procédé de réalisation d'un composant, destiné à constituer un interconnecteur pour pile à combustible (SOFC) ou électrolyseur à haute température (EHT), comportant les étapes suivantes :
a/ réalisation d'un substrat en alliage métallique, de type chromino-formeur, dont l'élément de base est du Fer (Fe) ou du Nickel (Ni), le substrat ayant deux faces planes principales,
b1/ revêtement d'une des faces planes du substrat par une couche épaisse en céramique à l'état cru ;
c1/ rainurage de la couche épaisse en céramique de sorte à délimiter des canaux adaptés pour la distribution et/ou la collecte de gaz, tels que vapeur d'eau H₂O, H₂, Air.

L'invention a également pour objet un procédé de réalisation d'un composant, destiné à constituer un interconnecteur pour pile à combustible (SOFC) ou électrolyseur à haute température (EHT), comportant les étapes suivantes :
a/ réalisation d'un substrat en alliage métallique, de type chromino-formeur, dont l'élément de base est du Fer (Fe) ou du Nickel (Ni), le substrat ayant deux faces planes principales,
b2/ revêtement d'une des faces planes du substrat par une couche épaisse métallique à l'état cru;
c2/ rainurage de la couche épaisse métallique de sorte à délimiter des canaux adaptés pour la distribution et/ou la collecte de gaz, tels que vapeur d'eau H₂O, H₂ ; Air.

Selon une mode de réalisation, les étapes b1/ et c1/ étant réalisées sur une face plane du substrat, les étapes b2/ et c2/ étant réalisées sur l'autre face plane du substrat.

Selon une variante de réalisation avantageuse, au préalable de l'étape b1/ et/ou l'étape b2/, la couche épaisse céramique ou métallique est obtenue par coulage en bande, l'étape b1/ et/ou b2/ consistant en un thermocollage ou thermopressage ou collage chimique de la bande sur l'une ou l'autre des faces du substrat.

Ainsi, en ce qui concerne la réalisation de la bande en céramique, la suspension contenant la poudre céramique, les solvants, dispersants, liants et plastifiants est coulée sur un support non adhérent. Après évaporation des solvants, on obtient des bandes dites crues.

Selon cette variante, l'étape b1/ consiste en un thermopressage ou thermocollage de la bande crue de céramique à une température comprise entre 60 et 130°C. Cette gamme de températures est avantageuse car celles-ci sont suffisamment élevées pour obtenir un ramollissement des liants polymères contenus dans une bande en céramique mais pas trop élevée pour ne pas les dégrader thermiquement.

Selon une autre variante de réalisation, l'étape b1/ et/ou b2/ consiste en une sérigraphie en couches épaisses d'une pâte céramique ou métallique sur l'une ou l'autre des faces du substrat.

En ce qui concerne le rainurage afin de délimiter les canaux, selon une première variante, l'étape c1/ peut être réalisée par calandrage de la bande crue de céramique obtenue par coulage entre deux rouleaux chauffés à la température de ramollissement des polymères de la bande de céramique, au moins un des deux rouleaux comportant des nervures correspondant aux canaux à délimiter, l'étape b1/ étant réalisée après l'étape c1/.

Selon une deuxième variante, susceptible de concerner une couche épaisse en céramique et/ou une couche épaisse métallique, l'étape c1/ et/ou c2/ peut être réalisée par ablation laser une fois l'étape respectivement b1/ et/ou b2/ achevée(s).

Selon cette deuxième variante, l'étape c1/ et/ou c2/ est de préférence réalisée au moyen d'un laser au CO2 et de préférence encore, achevée après plusieurs passages du laser sur la couche épaisse.

L'invention qui vient d'être décrite présente les avantages suivants :
- réduction du coût matière de l'alliage métallique en raison de la possibilité d'utiliser un substrat en alliage métallique fin voire très fin comparativement à ceux utilisés en tant qu'interconnecteurs selon l'art antérieur,
- réduction ou suppression du coût de réalisation des canaux comparativement à l'usinage mécanique ou l'emboutissage des interconnecteurs selon l'art antérieur,
- augmentation de la finesse de définition des canaux d'alimentation des gaz du fait de l'ablation laser possibles des couches épaisses,
- possibilité de déposer en une seule étape la couche dite de protection et la couche dite de contact électrique,
- amélioration de l'accommodation thermomécanique entre l'interconnecteur et une cellule électrochimique du fait du caractère flexible de la couche crue assemblée au substrat en alliage métallique,
- obtention d'une faible résistance électrique de contact de la couche céramique épaisse équivalente à une grille d'or.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue schématique de face d'une plaque interconnectrice d'un électrolyseur EHT selon l'état de l'art,
- la figure 1A est une vue de détail en coupe d'une plaque interconnectrice selon la figure 1,
- la figure 1B est une vue analogue à la figure 1A montrant les lignes de courant parcourant la plaque,
- la figure 2 est une vue schématique de face d'une autre plaque interconnectrice d'un électrolyseur selon l'état de l'art,
- la figure 3 est une reproduction photographique d'une plaque selon la figure 1, obtenue par usinage mécanique,
- la figure 4 est une reproduction photographique d'une plaque selon la figure 1, obtenue par emboutissage,
- la figure 5 est une vue schématique en éclaté d'une partie d'un électrolyseur à haute température comprenant des interconnecteurs selon l'état de l'art,
- la figure 6 est une vue schématique en éclaté d'une partie d'une pile à combustible SOFC comprenant des interconnecteurs selon l'état de l'art,
- la figure 7 est une vue en coupe schématique d'un interconnecteur revêtu selon l'invention,
- la figure 8 est une reproduction photographique d'un exemple de couche épaisse en céramique rainurée et thermocollée sur un substrat en alliage ferritique conformément à l'invention,
- la figure 8A est une vue en coupe schématique de la figure 8 montrant les dimensions considérées des canaux de la couche épaisse en céramique,
- la figure 9 montre les courbes représentatives de la géométrie de rainures (sillons) obtenues par ablation laser au CO2 sur une couche épaisse en céramique,
- la figure 10 montre la variation de profils des rainures montrées en figure 9 avant et après essai sous une charge de compression et à une température de 800°C,
- les figures 11A et 11B sont des reproductions photographiques d'une couche épaisse en céramique avant et après essai sous une charge de compression et à une température de 800°C,
- la figure 12 illustre les courbes de mesure de résistance série de différentes couches épaisses en céramique selon l'invention et à titre comparatifs de grilles en or, les couches et grille en or étant en contact avec un substrat en alliage métallique.

Les figures 1 à 4 ont déjà été commentées en préambule. Elles ne le sont donc pas décrites en détail ci-après.

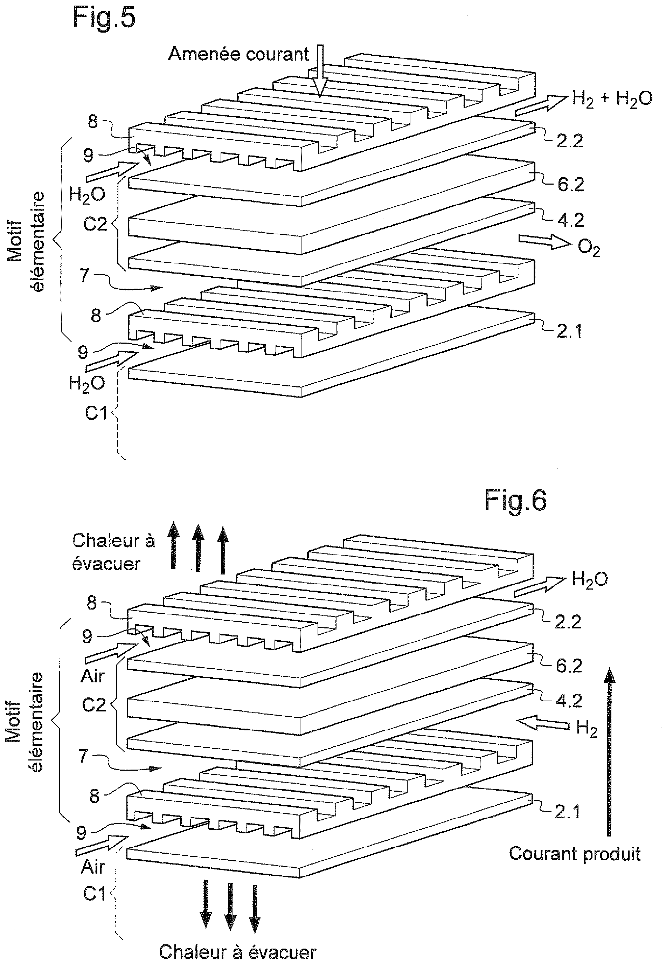

La figure 5 représente une vue éclatée de motifs élémentaires d'un électrolyseur de vapeur d'eau à haute température selon l'état de l'art. Cet électrolyseur EHT comporte une pluralité de cellules d'électrolyse élémentaires C1, C2.. empilées alternativement avec des interconnecteurs 8. Chaque cellule C1, C2... est constituée d'une cathode 2.1, 2.2,... et d'une anode 4.1, 4.2, entre lesquelles est disposé un électrolyte 6.1, 6.2.... Les symboles et les flèches de parcours de vapeur d'eau, de dihydrogène et d'oxygène, du courant sont montrés sur cette figure 5 à des fins de clarté.

Dans un électrolyseur EHT, un interconnecteur 8 est un composant en alliage métallique qui assure la séparation entre les compartiments anodique 7 et cathodique 9, définis par les volumes compris entre l'interconnecteur 8 et l'anode adjacente 4.2 et entre l'interconnecteur 8 et la cathode adjacente 2.1 respectivement. Il assure également la distribution des gaz aux cellules. L'injection de vapeur d'eau dans chaque motif élémentaire se fait dans le compartiment cathodique 9. Le collectage de l'hydrogène produit et de la vapeur d'eau résiduelle à la cathode 2.1, 2.2 est effectué dans le compartiment cathodique 9 en aval de la cellule C1,C2 après dissociation de la vapeur d'eau par celle-ci. Le collectage de l'oxygène produit à l'anode 4.2 est effectué dans le compartiment anodique 7 en aval de la cellule C1, C2 après dissociation de la vapeur d'eau par celle-ci.

L'interconnecteur 8 assure le passage du courant entre les cellules C1 et C2 par contact direct avec les électrodes adjacentes, c'est-à-dire entre l'anode 4.2 et la cathode 2.1 (figure 1).

La figure 6 représente les mêmes motifs élementaires que ceux de la figure 5 mais pour une pile à combustible SOFC avec des cellules de piles élémentaires C1, C2 et les interconnecteurs 8. Les symboles et les flèches de parcours d'air, de dihydrogène et d'oxygène, du courant sont montrés sur cette figure 6 à des fins de clarté.

L'injection de l'air contenant l'oxygène dans chaque motif élémentaire se fait dans le compartiment cathodique 9. Le collectage de l'eau produit à la cathode 2.1, 2.2 est effectué dans le compartiment cathodique 9 en aval de la cellule C1,C2. après recombinaison de l'eau par celle-ci avec l'hydrogène H2 injecté à l'anode 4.2 est effectué dans le compartiment anodique 7 en amont de la cellule C1, C2. Le courant produit lors de la recombinaison de l'eau est collecté par les interconnecteurs 8.

Selon l'état de l'art, ces interconnecteurs 8 sont usuellement réalisés par usinage mécanique de plaques épaisses ou par emploi de tôles minces, typiquement de 0,5 à 2 mm, embouties puis assemblées entre elles par soudage laser. Les coûts de matière et d'usinage sont importants. La technique de réalisation a pour avantage de limiter le coût de matière première mais ne permet pas d'atteindre une finesse de canaux aussi élevée que par usinage. De fait, les possibilités de réalisation pour la profondeur des canaux, la largeur unitaire de dent et le pas entre dents sont limitées. De plus, le coût de l'outillage d'emboutissage nécessite une production en grande série. En outre, le contact électrique entre les électrodes et l'interconnecteur n'est pas complètement satisfaisant en particulier du fait du défaut de planéité des électrodes.

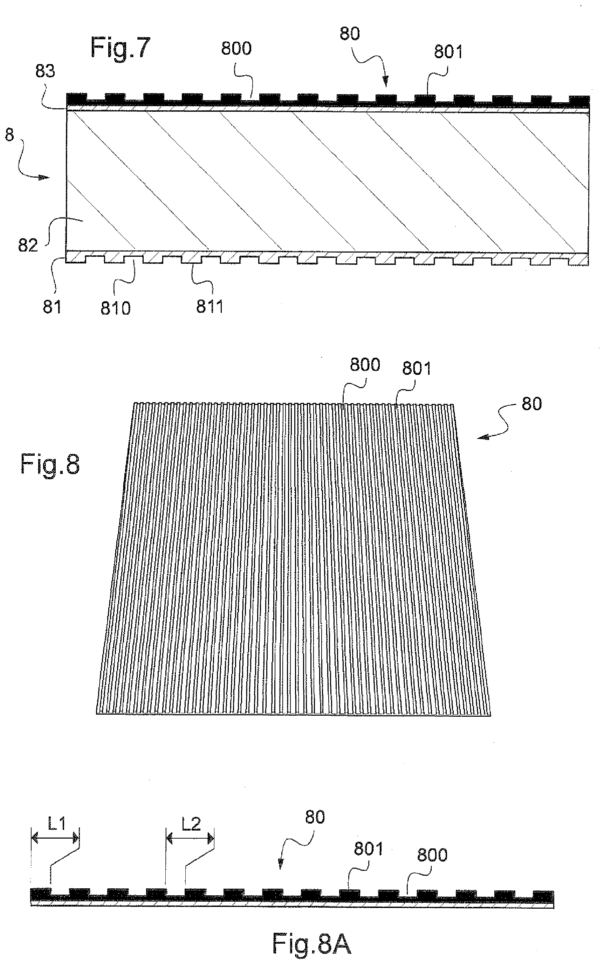

Aussi, pour simplifier les techniques de réalisation des interconnecteurs pour piles à combustible SOFC ou électrolyseur EHT et les rendre moins coûteuses, les inventeurs proposent un nouveau type d'interconnecteur 8 dont un exemple est représenté en figure 7.

Le composant 8 constituant le nouvel interconnecteur selon l'invention, comporte un substrat 82 en alliage métallique dont l'élément de base est du Fer (Fe) ou du Nickel (Ni), le substrat ayant deux faces planes principales, l'une des faces planes principales étant revêtue d'un revêtement comportant une couche épaisse en céramique 80 et l'autre des faces planes principales étant revêtue d'une couche épaisse métallique 81, chacune des couches épaisses étant rainurée en délimitant des canaux 800, 810 adaptés pour la distribution et/ou la collecte de gaz, tels que vapeur d'eau H₂O, gaz drainant, Air, O₂, H₂.

Eventuellement, une couche mince de protection en céramique 83 peut être intercalée entre la couche épaisse 80 en céramique et le substrat 82.

En fonctionnement dans un électrolyseur EHT ou une pile à combustible SOFC, les conditions d'utilisation sont les mêmes que celles classiquement utilisées : la circulation d'un mélange gazeux réducteur est faite dans les canaux 810 de la couche métallique épaisse 81 et celle d'un mélange gazeux oxydant est faire dans les canaux 800 de la couche céramique épaisse 80.

On décrit ci-après les différentes étapes de réalisation d'un exemple d'une couche épaisse 80 en céramique avec ses canaux 800 et différents essais prouvant la possibilité de son utilisation dans les applications visées, i.e. piles à combustibles SOFC et électrolyseur EHT.

L'exemple ci-après est fait à partir d'un substrat 82 constitué d'une seule tôle mince en alliage ferritique commercial du type CROFER 22 APU.

### Etape 1/ : fabrication d'une bande crue de LSM.

On réalise le mélange entre un composé d'un poids de 60 g de manganite de lanthane de formule La_{0,8}Sr_{0,2}MnO₃ avec 0,8% en poids d'acide oléique en tant que dispersant, 15,7% de 2-butanone et 15,7% d'éthanol en tant que solvants.

Le mélange est broyé dans un broyeur de type planétaire. Le cycle de fonctionnement du broyeur planétaire est le suivant :
- vitesse de rotation : 400 tours par minute ;
- durée : 1 heure.

On effectue alors un ajout, dans le mélange broyé, d'un poids de 3,2g de polyvinyle de butyral (PVB 90), et de 5,5g de polyéthylène glycol (PEG 400) en tant que solvant puis on mélange le tout à l'aide d'un broyeur de type planétaire. Le cycle de fonctionnement du broyeur de type planétaire est le suivant :
- vitesse de rotation : 200 tours par minute ;
- durée : 10 heures.

On effectue ensuite une désaération du mélange à l'aide d'un mélangeur de type à rouleaux. Le cycle de fonctionnement du mélangeur à rouleaux est le suivant :
- vitesse de rotation : 20 tours par minute ;
- durée : 24 heures.

On réalise alors le coulage en bande de la suspension obtenue après désaération à l'aide d'un couteau racleur. La hauteur active du couteau est égale à 1000µm. La vitesse de coulage est égale à 1,5 m/mn. Le coulage s'effectue sur une feuille de polymère (polyester) siliconé afin de favoriser le décollement de la bande une fois séchée.

Puis, on effectue le séchage de la bande crue obtenue par coulage, à l'air ambiant pendant une durée de 3h.

La bande crue séchée de LSM est enfin découpée à des dimensions correspondantes à une électrode à air dans une pile SOFC, contre laquelle la bande est destinée à venir s'appuyer. La découpe peut par exemple être réalisée à l'aide d'une table de découpe laser.

### Etape 2/ : thermopressage

La bande crue de LSM est ensuite déposée sur une tôle mince d'acier ferritique de 1.5 mm d'épaisseur puis elle est soudée par à celle-ci par thermopressage à l'aide d'une presse. L'épaisseur de la bande crue de LSM est de 325 µm. Dans le cas où la couche mince céramique de protection 83 est ajoutée, on procède de manière identique.

Le cycle de fonctionnement de la presse est le suivant :
- force de pressage : 1kg/mm² ;
- durée d'application du pressage : 2h ;
- température régulée des deux plateaux de presse : 80°C.

Après refroidissement à la température ambiante, l'assemblage réalisé entre bande crue de LSM et tôle mince d'acier ferritique est retiré de la presse.

### Etape 3/ : Obtention des rainures

On réalise un rainurage par ablation laser de la bande crue de LSM. L'ablation est réalisé à l'aide d'une table traçante équipée d'un laser au CO₂ d'une puissance variable jusqu'à la puissance maximale de 50 Watt. La vitesse de déplacement du laser est également variable, jusqu'à la vitesse maximale de 2 cm/s. L'utilisation d'un tel appareil est particulièrement avantageuse car il permet par ses caractéristiques variables de fonctionnement de brûler, c'est-à-dire réaliser une abrasion, plus ou moins en profondeur les polymères constituant la bande crue, ce qui libère ainsi la charge associée, le LSM. On peut ainsi creuser des rainures (sillons) plus ou moins profondes. Le cas échéant, plusieurs passages du laser au CO₂ sur la bande crue peuvent être effectués pour augmenter plus ou moins la profondeur et/ou la largeur des rainures.

La figure 8 est une reproduction photographique d'une couche épaisse de LSM rainurée et thermocollée sur un substrat constitué d'une seule feuille de CROFER 22 APU selon l'invention. La couche photographiée a par exemple une surface de 100 cm².

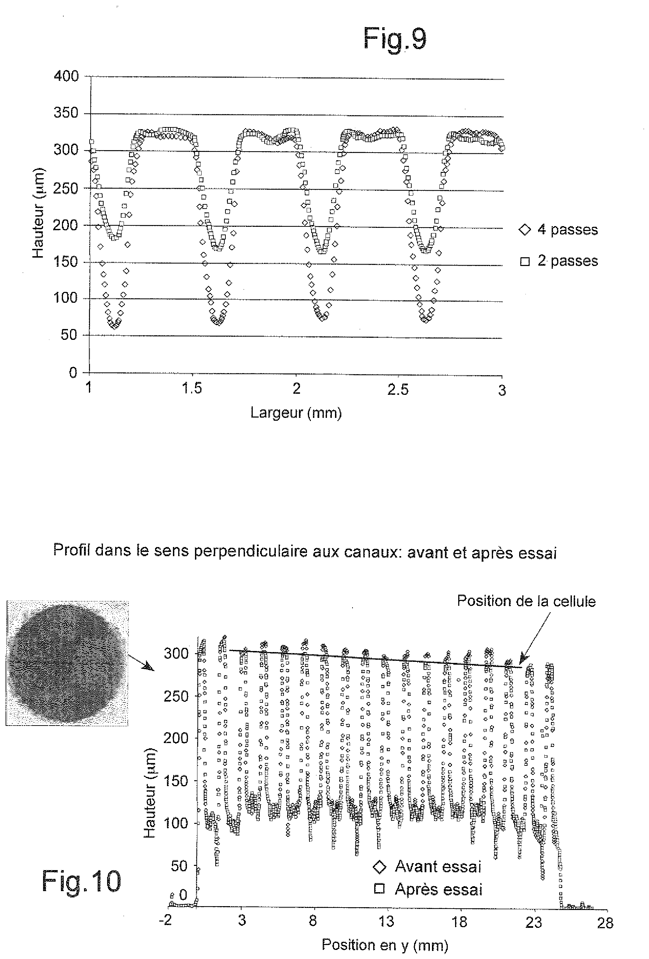

On a représenté en figure 9, les courbes représentatives de la géométrie de rainures (sillons), c'est-à-dire leur hauteur et leur largeur, issues d'un nombre respectivement de deux et quatre passages du laser au CO₂. Ainsi, les largeurs L1 des dents 801 obtenues peuvent être réduites jusqu'à 150 µm et celles L2 des canaux 800 peuvent être réduites jusqu'à 150 µm. Il va de soi que les largeurs L1, L2 peuvent être supérieures à 150 µm.

On précise ici que le zéro de la hauteur correspond à l'interface avec la tôle mince d'acier ferritique et que chacune des géométries a été obtenue en réglant la vitesse de déplacement du laser à une valeur égale à 40% de la vitesse maximale indiquée ci-avant et la puissance à une valeur égale à 50% de la puissance maximale indiquée ci-avant (50W).

Lors de son utilisation, c'est-à-dire lorsqu'il constitue un interconnecteur dans un empilement soit d'un réacteur d'électrolyse à l'eau à haute température (EHT) soit d'une pile à combustible SOFC, le composant métallique revêtu de la couche épaisse de LSM obtenue dans l'exemple décrit ci-avant est mis sous charge de compression dans l'empilement afin d'assurer le contact électrique avec les autres éléments de l'empilement et en particulier la cathode d'une pile SOFC. D'autre part, dans des conditions d'EHT, il peut subir des températures élevées comprises entre 600°C et 900°C.

Pour valider le bon comportement thermomécanique sous effort de compression, on a réalisé un essai selon lequel on a mis la couche de LSM à une température de 800°C et sous une charge de 0,2 MPa.

La figure 10 montre les courbes représentatives de la géométrie de rainures (sillons) avant et après la charge de 0,2MPa. De cette figure, il ressort que la couche crue de LSM ne s'écrase que de 15µm environ. Cela prouve que la couche crue de LSM peut parfaitement s'adapter mécaniquement à une cellule électrochimique d'un réacteur EHT ou pile à combustible SOFC, et ce dans les conditions de température élevées d'utilisation. Autrement dit, le caractère cru de la couche de LSM lui permet d'avoir un bon comportement thermomécanique qui implique un bon contact mécanique avec une cellule électrochimique malgré les imperfections éventuelles de surface de cette dernière.

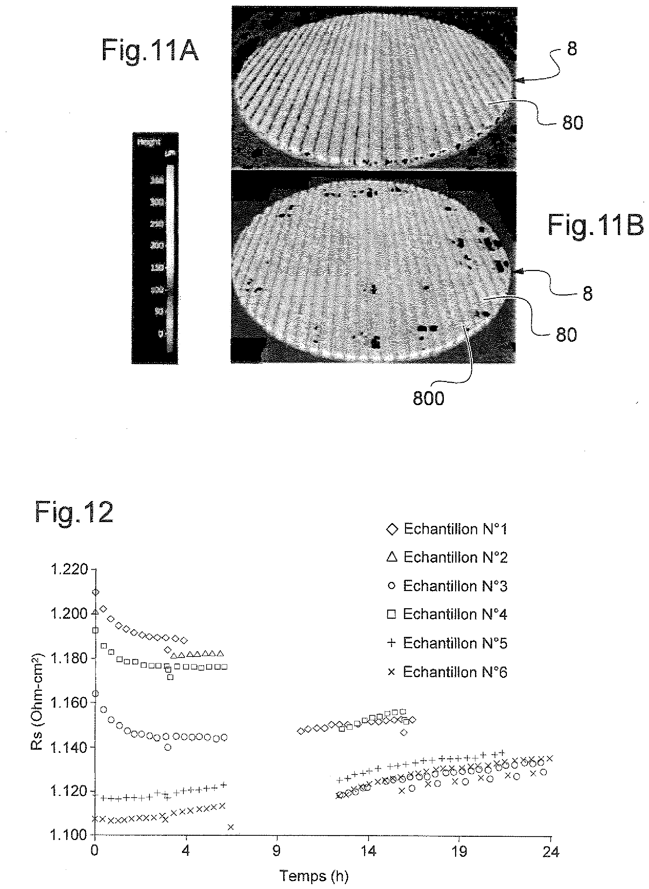

Les figures 11A et 11B sont des représentations en trois dimensions de la couche de LSM respectivement avant et après l'essai à 800°C sous une charge de 0,2MPa. On voit clairement que la couche crue de LSM reste intègre après utilisation du fait de sa résistance mécanique suffisamment élevée.

En outre, on a réalisé des mesures de la résistance série avec le composant en alliage métallique pour caractériser la conductivité électrique de la couche de LSM obtenue dans des conditions de fonctionnement représentatives simulant l'entrée de compartiments cathodiques 9 d'une pile SOFC. La méthode de mesure utilisée est la méthode dite des quatre points, telle qu'explicitée dans la publication [8].

Pour ce faire, on a réalisé plusieurs échantillons tous à partir d'un composant en acier inoxydable, les échantillons selon l'invention N°1 à 4 étant constitués par un assemblage du composant avec une couche de LSM par thermopressage, les échantillons comparatifs N°5 à 6 étant constitués par un assemblage du composant avec une grille d'or.

On précise que dans l'échantillon N°l, la couche de LSM est dépourvue de canaux tandis que dans les échantillons N°2 à 4, la couche de LSM est rainurée en définissant des canaux identiques de largeur unitaire L1 égale à 1 mm, deux canaux adjacents étant espacés d'une dent ou nervure de largeur unitaire L2 égale à 0,25 mm.

La figure 12 montre les résultats de mesure de la résistance série des différents échantillons en fonction de la durée. On précise ici que les points de mesure entre environ 7h et 10h n'ont pas été reportés sur la figure 12. L'épaisseur des couches de LSM dans les échantillons N°1 à 4 est de 325 µm tandis que l'épaisseur des grilles des échantillons N°5 et 6 est de 500 µm.

De ces mesures, on en déduit que les résistances série sont quasiment identiques entre tous les échantillons N°1 à 6. On peut donc en conclure que la résistance de contact d'une couche épaisse de LSM selon l'invention est proche voire égale à une grille d'or qui est l'élément mécanique connu à ce jour comme ayant la résistance de contact la plus faible. Autrement dit, une couche de LSM selon l'invention présente une résistance électrique de contact négligeable, inférieure à 10 mΩ.cm².

D'autres essais de mesure ont été réalisés au-delà de 24heures mais avec un empilement de cellules électrochimiques, d'interconnecteurs selon l'invention et des contacts. Ces essais ont été satisfaisants.

L'obtention d'une couche métallique épaisse selon l'invention sur la face d'un substrat métallique opposée à celle comportant la couche céramique épaisse peut être effectuée de manière similaire à ce qui vient d'être décrit, i.e. avec coulage en bande, suivi d'un thermopressage et de réalisation de rainures par ablation au moyen d'un laser au CO₂.

L'invention n'est pas limitée aux exemples qui viennent d'être décrits ; on peut notamment combiner entre elles des caractéristiques des exemples illustrés au sein de variantes non illustrées.

### Références citées

[1]. J.W. Fergus, "Metallic interconnects for solid oxide fuel cells", Mater. Sci. Eng. A 397 (2005) 271-283.
[2]. W.J. Quadakkers, J. Piron-Abellan, V. Shemet, L. Singheiser, "Metallic interconnectors for solid oxide fuel cells - a review", Mat. High Temp. 20 (2) (2003) 115-127.
[3]. Z. Yang, K. Scott Weil, D.M. Paxton, J.W. Stevenson, "Selection and Evaluation of Heat-Resistant Alloys for SOFC Interconnect Applications", J. Electrochem. Soc. 150 (9) (2003) A1188-A1201.
[4].: J.E. Hammer, S.J. Laney, R.W. Jackson, K. Coyne, F.S. Pettit, G.H. Meier, "The Oxidation of Ferritic Stainless Steels in Simulated Solid-Oxide Fuel-Cell Atmospheres, Oxid. Met". 67(1/2) (2007) 1-38.
[5].S.J. Geng et al., "Investigation on Haynes 242 Alloy as SOFC Interconnect in Simulated Anode Environment », Electrochemical and Solid-State Letters, 9 (4) (2006) A211-A214.
[6]. N. Shaigan et al., "A review of recent progress in coatings, surface modifications and alloy developments for solid oxide fuel cell ferritic stainless steel interconnects », J. Power Sources 195 (2010) 1529-1542.
[7]. Xiango Li, International Journal of hydrogen Energy 30 (2005) 359-371.
[8]. S. Fontana, R. Amendola, S. Chevalier, P. Piccardo, G. Caboche, M. Viviani, R. Molins, M. Sennour, "Metallic interconnects for SOFC: Characterisation of corrosion resistance and conductivity evaluation at operating temperature of differently coated alloys", J. Power Sources 171 (2007) 652-662.
[9]. Maria Rosa ARDIGO, "Optimisation d'interconnecteurs métalliques pour la production d'hydrogène par électrolyse de la vapeur d'eau à haute température (EVHT)", Thèse de doctorat soutenue le 09 Septembre 2012, http://nuxeo.u-bourgogne.fr/nuxeo/site/esupversions/9a356817-2ef1-4b4e-863e-8fa66b4c4a73

## Revendications

1. Composant (8) constituant un interconnecteur de pile à combustible ou d'électrolyseur à haute température, comportant un substrat en alliage métallique (82), de type chromino-formeur, dont l'élément de base est du Fer (Fe) ou du Nickel (Ni), le substrat ayant deux faces planes principales, une des faces planes principales étant revêtue d'un revêtement comportant une couche épaisse en céramique (80) à l'état cru, ladite couche épaisse en céramique (80) étant rainurée en délimitant des canaux (800) adaptés pour la distribution et/ou la collecte de gaz, tels que vapeur d'eau H₂O, H₂, Air.

2. Composant (8) constituant un interconnecteur de pile à combustible ou d'électrolyseur à haute température, comportant un substrat en alliage métallique (82), de type chromino-formeur, dont l'élément de base est du Fer (Fe) ou du Nickel (Ni), le substrat ayant deux faces planes principales, une des faces planes principales étant revêtue d'une couche épaisse métallique (81) à l'état cru, ladite couche épaisse métallique (81) étant rainurée en délimitant des canaux (810) adaptés pour la distribution et/ou la collecte de gaz, tels que vapeur d'eau H₂O, H₂ ; O₂, gaz drainant.

3. Composant selon la revendication 1 en combinaison avec la revendication 2, l'une des faces planes principales étant revêtue d'un revêtement comportant une couche épaisse en céramique et l'autre des faces planes principales étant revêtue d'une couche épaisse métallique, chacune des couches épaisses étant rainurée en délimitant des canaux adaptés pour la distribution et/ou la collecte de gaz, tels que vapeur d'eau H₂O, gaz drainant, Air, O₂, H₂.

4. Composant selon l'une des revendications 1 ou 3, le matériau de la couche épaisse en céramique étant choisi parmi un manganite de lanthane de formule La₁₋ₓSrₓMO₃ avec M (métaux de transition) = Ni, Fe, Co, Mn, Cr, seul ou en mélange, ou des matériaux de structure lamellaire tels que les nickelates de lanthanide de formule Ln₂NiO₄ (Ln= La, Nd, Pr), ou un autre oxyde pérovskite conducteur électrique.

5. Composant selon l'une des revendications 2 à 4, le matériau de la couche épaisse métallique étant choisi parmi le Nickel (Ni) et ses alliages ainsi que tous les alliages chromino-formeurs dont l'élément de base est du Fer (Fe).

6. Composant selon l'une des revendications précédentes, l'épaisseur de la couche en céramique ou de la couche métallique étant comprise entre 60 et 500 µm.

7. Composant selon l'une des revendications précédentes, l'alliage métallique chromino-formeur du substrat étant choisi parmi les alliages inoxydables ferritiques (Fe-Cr), austénitiques (Ni-Fe-Cr) ou les superalliages à base Nickel formant en surface une couche d'oxyde de chrome Cr₂O₃, dit couche de chromine.

8. Composant selon l'une des revendications précédentes, le substrat étant constitué d'au moins une feuille mince ou d'une unique plaque à faces principales planes.

9. Composant selon l'une des revendications 3 à 9, constituant un interconnecteur d'un réacteur d'électrolyse à l'eau à haute température (EHT) comportant un empilement de cellules d'électrolyse élémentaires formées chacune d'une cathode, d'une anode et d'un électrolyte intercalé entre la cathode et l'anode, la couche épaisse en céramique rainurée étant en contact avec l'anode d'une de deux cellules élémentaires adjacentes, la couche épaisse métallique rainurée étant en contact avec la cathode de l'autre des deux cellules élémentaires adjacentes.

10. Composant selon l'une des revendications 3 à 9, constituant un interconnecteur d'une pile à combustible (SOFC) comportant un empilement de cellules de piles élémentaires formées chacune d'une cathode, d'une anode et d'un électrolyte intercalé entre la cathode et l'anode, la couche épaisse en céramique rainurée étant en contact avec la cathode d'une de deux cellules élémentaires adjacentes, la couche épaisse métallique rainurée étant en contact avec l'anode de l'autre des deux cellules élémentaires adjacentes.

11. Composant selon l'une des revendications précédentes, la largeur des canaux étant comprise entre 0,15 et 5 mm.

12. Composant selon l'une des revendications précédentes, la profondeur des canaux étant comprise entre 0,1 et 0,5 mm.

13. Procédé de réalisation d'un composant, destiné à constituer un interconnecteur pour pile à combustible (SOFC) ou électrolyseur à haute température (EHT), comportant les étapes suivantes :
a/ réalisation d'un substrat en alliage métallique (8), de type chromino-formeur, dont l'élément de base est du Fer (Fe) ou du Nickel (Ni), le substrat ayant deux faces planes principales ;
b1/ revêtement d'une des faces planes du substrat par une couche épaisse en céramique à l'état cru;
c1/ rainurage de la couche épaisse en céramique de sorte à délimiter des canaux adaptés pour la distribution et/ou la collecte de gaz, tels que vapeur d'eau H₂O, H₂ ; Air.

14. Procédé de réalisation d'un composant, destiné à constituer un interconnecteur pour pile à combustible (SOFC) ou électrolyseur à haute température (EHT), comportant les étapes suivantes :
a/ réalisation d'un substrat en alliage métallique (8), de type chromino-formeur, dont l'élément de base est du Fer (Fe) ou du Nickel (Ni), le substrat ayant deux faces planes principales,
b2/ revêtement d'une des faces planes du substrat par une couche épaisse métallique à l'état cru;
c2/ rainurage de la couche épaisse métallique de sorte à délimiter des canaux adaptés pour la distribution et/ou la collecte de gaz, tels que vapeur d'eau H₂O, H₂ ; Air.

15. Procédé selon l'une des revendications 13 ou 14, les étapes b1/ et c1/ étant réalisées sur une face plane du substrat, les étapes b2/ et c2/ étant réalisées sur l'autre face plane du substrat.

16. Procédé selon l'une des revendications 13 à 15, selon lequel au préalable de l'étape b1/ et/ou l'étape b2/, la couche épaisse céramique ou métallique est obtenue par coulage en bande, l'étape b1/ et/ou b2/ consistant en un thermocollage ou thermopressage ou collage chimique de la bande sur l'une ou l'autre des faces du substrat.

17. Procédé selon la revendication 16, l'étape c1/ étant réalisée par calandrage de la bande crue de céramique obtenue par coulage entre deux rouleaux chauffés à la température de ramollissement des polymères de la bande de céramique, au moins un des deux rouleaux comportant des nervures correspondant aux canaux à délimiter, l'étape b1/ étant réalisée après l'étape c1/.

18. Procédé selon l'une des revendications 13 à 15, l'étape b1/ et/ou b2/ consistant en une sérigraphie en couches épaisses d'une pâte céramique ou métallique sur l'une ou l'autre des faces du substrat.

19. Procédé selon l'une des revendications 13 à 18, l'étape c1/ et/ou c2/ étant réalisée par ablation laser une fois l'étape respectivement b1/ et/ou b2/ achevée (s).

## Patentansprüche

1. Komponente (8), die einen Interkonnektor einer Hochtemperaturbrennstoffzelle oder eines Hochtemperaturelektrolyseurs darstellt, welche ein Substrat (82) aus einer Metalllegierung vom Chromoxid-bildenden Typ umfasst, deren Grundelement Eisen (Fe) oder Nickel (Ni) ist, wobei das Substrat zwei ebene Hauptflächen aufweist, eine der ebenen Hauptflächen mit einer Beschichtung beschichtet ist, die eine Keramik-Dickschicht (80) im Grünzustand umfasst, die Keramik-Dickschicht (80) mit Aussparungen versehen ist, die Kanäle (800) abgrenzen, die zur Verteilung und/oder zum Sammeln eines Gases, wie Wasserdampf H₂O, H₂, Luft, ausgelegt sind.

2. Komponente (8), die einen Interkonnektor einer Hochtemperaturbrennstoffzelle oder eines Hochtemperaturelektrolyseurs darstellt, welche ein Substrat (82) aus einer Metalllegierung vom Chromoxid-bildenden Typ umfasst, deren Grundelement Eisen (Fe) oder Nickel (Ni) ist, wobei das Substrat zwei ebene Hauptflächen aufweist, eine der ebenen Hauptflächen mit einer Metall-Dickschicht (81) im Grünzustand beschichtet ist, die Metall-Dickschicht (81) mit Aussparungen versehen ist, die Kanäle (810) abgrenzen, die zur Verteilung und/oder zum Sammeln eines Gases, wie Wasserdampf H₂O, H₂; O₂, Drainagegas, ausgelegt sind.

3. Komponente nach Anspruch 1 in Verbindung mit Anspruch 2, wobei eine der ebenen Hauptflächen mit einer Beschichtung beschichtet ist, die eine Keramik-Dickschicht umfasst, und die andere der ebenen Hauptflächen mit einer Metall-Dickschicht beschichtet ist, wobei jede der Dickschichten mit Aussparungen versehen ist, die Kanäle abgrenzen, die zur Verteilung und/oder zum Sammeln eines Gases, wie Wasserdampf H₂O, Drainagegas, Luft, O₂, H₂, ausgelegt sind.

4. Komponente nach einem der Ansprüche 1 oder 3, wobei das Material der Keramik-Dickschicht aus einem Lanthanmanganit der Formel La₁₋ₓSrₓMO₃ mit M (Übergangsmetalle) = Ni, Fe, Co, Mn, Cr, einzeln oder als Mischung, oder schichtförmigen Strukturwerkstoffen wie Lanthanoidnickelaten der Formel Ln₂NiO₄ (Ln = La, Nd, Pr) oder einem anderen elektrisch leitenden Perowskitoxid ausgewählt ist.

5. Komponente nach einem der Ansprüche 2 bis 4, wobei das Material der Metall-Dickschicht aus Nickel (Ni) und seinen Legierungen sowie allen Chromoxid-bildenden Legierungen ausgewählt ist, deren Grundelement Eisen (Fe) ist.

6. Komponente nach einem der vorhergehenden Ansprüche, wobei die Dicke der Keramikschicht oder der Metallschicht zwischen 60 und 500 µm beträgt.

7. Komponente nach einem der vorhergehenden Ansprüche, wobei die Chromoxid-bildende Metalllegierung des Substrats aus nichtoxidierenden ferritischen (Fe-Cr-), austenitischen (Ni-Fe-Cr-)Legierungen oder Nickelbasis-Superlegierungen, die auf der Oberfläche eine als Chromoxid-Schicht bezeichnete Chromoxid-Schicht Cr₂O₃ bilden, ausgewählt ist.

8. Komponente nach einem der vorhergehenden Ansprüche, wobei das Substrat aus mindestens einer Folie oder einer einzelnen Platte mit ebenen Hauptflächen besteht.

9. Komponente nach einem der Ansprüche 3 bis 9, die einen Interkonnektor eines Hochtemperatur-Wasserelektrolysereaktors (EHT) darstellt, der einen Stapel von Elektrolysezelleneinheiten umfasst, die jeweils aus einer Kathode, einer Anode und einem zwischen der Kathode und der Anode angeordneten Elektrolyten bestehen, wobei sich die mit Aussparungen versehene Keramik-Dickschicht in Kontakt mit der Anode einer der beiden benachbarten Zelleneinheiten befindet, sich die mit Aussparungen versehene Metall-Dickschicht in Kontakt mit der Kathode der anderen der beiden benachbarten Zelleneinheiten befindet.

10. Komponente nach einem der Ansprüche 3 bis 9, die einen Interkonnektor einer Brennstoffzelle (SOFC) darstellt, die einen Stapel von Elektrolysezelleneinheiten umfasst, die jeweils aus einer Kathode, einer Anode und einem zwischen der Kathode und der Anode angeordneten Elektrolyten bestehen, wobei sich die mit Aussparungen versehene Keramik-Dickschicht in Kontakt mit der Kathode einer der beiden benachbarten Zelleneinheiten befindet, sich die mit Aussparungen versehene Metall-Dickschicht in Kontakt mit der Anode der anderen der beiden benachbarten Zelleneinheiten befindet.

11. Komponente nach einem der vorhergehenden Ansprüche, wobei die Breite der Kanäle zwischen 0,15 und 5 mm beträgt.

12. Komponente nach einem der vorhergehenden Ansprüche, wobei die Tiefe der Kanäle zwischen 0,1 und 0,5 mm beträgt.

13. Verfahren zur Herstellung einer Komponente, die dazu vorgesehen ist, einen Interkonnektor für eine Hochtemperaturbrennstoffzelle (SOFC) oder einen Hochtemperaturelektrolyseur (EHT) darzustellen, das die folgenden Schritte umfasst:
a) die Herstellung eines Substrats (8) aus einer Metalllegierung vom Chromoxid-bildenden Typ, deren Grundelement Eisen (Fe) oder Nickel (Ni) ist, wobei das Substrat zwei ebene Hauptflächen aufweist;
bl) das Beschichten einer der ebenen Flächen des Substrats mit einer Keramik-Dickschicht im Grünzustand;
cl) das Versehen der Keramik-Dickschicht mit Aussparungen so, dass Kanäle zur Verteilung und/oder zum Sammeln eines Gases wie Wasserdampf H₂O, H₂; Luft abgegrenzt werden.

14. Verfahren zur Herstellung einer Komponente, die dazu vorgesehen ist, einen Interkonnektor für eine Hochtemperaturbrennstoffzelle (SOFC) oder einen Hochtemperaturelektrolyseur (EHT) darzustellen, das die folgenden Schritte umfasst:
a) die Herstellung eines Substrats (8) aus einer Metalllegierung vom Chromoxid-bildenden Typ, deren Grundelement Eisen (Fe) oder Nickel (Ni) ist, wobei das Substrat zwei ebene Hauptflächen aufweist,
b2) das Beschichten einer der ebenen Flächen des Substrats mit einer Metall-Dickschicht im Grünzustand;
c2) das Versehen der Metall-Dickschicht mit Aussparungen so, dass Kanäle zur Verteilung und/oder zum Sammeln eines Gases wie Wasserdampf H₂O, H₂; Luft abgegrenzt werden.

15. Verfahren nach einem der Ansprüche 13 oder 14, wobei die Schritte b1) und c1) auf einer ebenen Fläche des Substrats erfolgen, die Schritte b2) und c2) auf der anderen ebenen Fläche des Substrats erfolgen.

16. Verfahren nach einem der Ansprüche 13 bis 15, wobei vor Schritt b1) und/oder Schritt b2) die Keramik- oder Metall-Dickschicht durch Bandgießen erhalten wird, Schritt b1) und/oder b2) aus einem Heißkleben oder Heißpressen oder chemischen Verkleben des Bandes auf der einen oder der anderen Fläche des Substrats bestehen.

17. Verfahren nach Anspruch 16, wobei Schritt c1) durch Kalandern des durch Gießen erhaltenen grünen Keramikbandes zwischen zwei Walzen erhalten wird, die auf die Erweichungstemperatur der Polymere des Keramikbandes erwärmt sind, wobei mindestens eine der beiden Walzen Rippen umfasst, die den abzugrenzenden Kanälen entsprechen, wobei Schritt b1) nach Schritt c1) erfolgt.

18. Verfahren nach einem der Ansprüche 13 bis 15, wobei Schritt b1) und/oder b2) aus einem Siebdruck von Dickschichten einer keramischen oder metallischen Paste auf die eine oder die andere der Flächen des Substrats besteht.

19. Verfahren nach einem der Ansprüche 13 bis 18, wobei Schritt c1) und/oder c2) durch Laserablation nach der Beendigung des jeweiligen Schritts b1) und/oder b2 erfolgt.

## Claims

1. Component (8) constituting an interconnector of a fuel cell or of a high-temperature electrolyser, including a substrate made of metal alloy (82), of chromia-forming type, the base element of which is iron (Fe) or nickel (Ni), the substrate having two main flat faces, one of the main flat faces being coated with a coating including a thick ceramic layer (80) in a green state, said thick ceramic layer (80) being grooved, delimiting channels (800) that are suitable for distributing and/or collecting gases, such as H₂O steam, H₂, air.

2. Component (8) constituting an interconnector of a fuel cell or of a high-temperature electrolyser, including a substrate made of metal alloy (82), of chromia-forming type, the base element of which is iron (Fe) or nickel (Ni), the substrate having two main flat faces, one of the main flat faces being coated with a thick metallic layer (81) in a green state, said thick metallic layer (81) being grooved, delimiting channels (810) that are suitable for distributing and/or collecting gases, such as H₂O steam, H₂; O₂, draining gas.

3. Component according to Claim 1 in combination with Claim 2, one of the main flat faces being coated with a coating including a thick ceramic layer and the other of the main flat faces being coated with a thick metallic layer, each of the thick layers being grooved, delimiting channels that are suitable for distributing and/or collecting gases, such as H₂O steam, draining gas, air, O₂, H₂.

4. Component according to one of Claims 1 or 3, the material of the thick ceramic layer being chosen from a lanthanum manganite of formula La₁₋ₓSrₓMO₃ with M (transition metals) = Ni, Fe, Co, Mn, Cr, alone or as a mixture, or materials of lamellar structure such as lanthanide nickelates of formula Ln₂NiO₄ (Ln= La, Nd, Pr), or another electrically conductive perovskite oxide.

5. Component according to one of Claims 2 to 4, the material of the thick metallic layer being chosen from nickel (Ni) and alloys thereof and also all the chromia-forming alloys whose base element is iron (Fe).

6. Component according to one of the preceding claims, the thickness of the ceramic layer being between 60 and 500 µm.

7. Component according to one of the preceding claims, the chromia-forming metal alloy of the substrate being chosen from ferritic (Fe-Cr), austenitic (Ni-Fe-Cr) stainless-steel alloys or superalloys based on nickel forming at the surface a layer of chromium oxide Cr₂O₃, known as the chromia layer.

8. Component according to one of the preceding claims, the substrate consisting of at least one thin sheet or of a single plate with flat main faces.

9. Component according to one of Claims 3 to 9, consisting of an interconnector of a high-temperature electrolysis (HTE) reactor including a stack of elementary electrolysis cells each formed from a cathode, an anode and an electrolyte intercalated between the cathode and the anode, the thick grooved ceramic layer being in contact with the anode of one of two adjacent elementary cells, the thick grooved metallic layer being in contact with the cathode of the other of the two adjacent elementary cells.

10. Component according to one of Claims 3 to 9, constituting an interconnector of a fuel cell (SOFC) including a stack of elementary cells each formed from a cathode, an anode and an electrolyte intercalated between the cathode and the anode, the thick grooved ceramic layer being in contact with the cathode of one of two adjacent elementary cells, the thick grooved metallic layer being in contact with the anode of the other of the two adjacent elementary cells.

11. Component according to one of the preceding claims, the width of the channels being between 0.15 and 5 mm.

12. Component according to one of the preceding claims, the depth of the channels being between 0.1 and 0.5 mm.

13. Process for preparing a component intended to constitute an interconnector for a fuel cell (SOFC) or a high-temperature electrolyser (HTE), including the following steps:
a/ preparing a substrate made of metal alloy (8), of chromia-forming type, the base element of which is iron (Fe) or nickel (Ni), the substrate having two main flat faces,
b1/ coating one of the flat faces of the substrate with a thick ceramic layer in a green state;
c1/ grooving the thick ceramic layer so as to delimit channels that are suitable for distributing and/or collecting gases, such as H₂O steam, H₂; air.

14. Process for preparing a component, intended to constitute an interconnector for a fuel cell (SOFC) or a high-temperature electrolyser (HTE), including the following steps:
a/ preparing a substrate made of metal alloy (8), of chromia-forming type, the base element of which is iron (Fe) or nickel (Ni), the substrate having two main flat faces,
b2/ coating one of the flat faces of the substrate with a thick metallic layer in a green state;
c2/ grooving the thick metallic layer so as to delimit channels that are suitable for distributing and/or collecting gases, such as H₂O steam, H₂; air.

15. Process according to either of Claims 13 and 14, steps b1/ and c1/ being performed on one flat face of the substrate, steps b2/ and c2/ being performed on the other flat face of the substrate.

16. Process according to one of Claims 13 to 15, in which, prior to step b1/ and/or step b2/, the thick ceramic or metallic layer is obtained by tape casting, step b1/ and/or b2/ consisting of hot-bonding or hot-pressing or chemical bonding of the tape to one or other of the faces of the substrate.

17. Process according to Claim 16, step c1/ being performed by calendaring the green ceramic tape obtained by casting between two rolls heated to the softening point of the polymers of the ceramic tape, at least one of the two rolls including ribs corresponding to the channels to be delimited, step b1/ being performed after step c1/.

18. Process according to one of Claims 13 to 15, step b1/ and/or b2/ consisting of screen printing in thick layers of a ceramic or metallic paste onto one or other of the faces of the substrate.

19. Process according to one of Claims 13 to 18, step c1/ and/or c2/ being performed by laser ablation once step b1/ and/or b2/, respectively, has been completed.
